# EUROPEAN PATENT APPLICATION

(11) **EP 4 116 971 A2**
(43) Date of publication of application: **11.01.2023**
(21) Application number: 22179579.2
(22) Date of filing: 17.06.2022
(51) Int. Cl.: G11B 7/0065, G11B 7/007, G11B 7/08, G11B 7/09, G11B 7/1378, G11B 7/2405

(54) **HOLOGRAPHIC STORAGE OPTICAL SYSTEM AND BEAM CALIBRATING METHOD THEREOF**

(30) Priority: 17.06.2021 CN 202110673706
(71) Applicant: Amethystum Storage Technology Co., Ltd., Meizhou, Guangdong 514700 (CN)
(72) Inventor: HU, Dejiao, Shejiang Town, Mei County, Meizhou, 514700 (CN); LIU, Yicheng, Shejiang Town, Mei County, Meizhou, 514700 (CN); TIAN, Jun, Shejiang Town, Mei County, Meizhou, 514700 (CN)
(74) Representative: Puschmann Borchert Kaiser Klettner Patentanwälte Partnerschaft mbB

(57) **Abstract**

The present invention provides a holographic storage optical system and a beam calibrating method thereof. The optical path system includes a storage medium, a recording unit, an imaging unit and a servo unit. The recording unit comprises a movable Fourier lens, by which the positions and irradiation angles of a signal light spot and a reference light spot are adjusted. The servo unit comprises a calibration lens for adjusting the positions of a servo light spot in the horizontal and vertical directions so that the servo light spot is located at an optimal position relative to signal light beam and reference light beam. The beam calibrating method comprises (1) before recording a data hologram, burning a calibration hologram at a calibration holographic positioning mark on an optical track of a storage medium; (2) before reproducing the data hologram, using the calibration hologram to optimize the signal-to-noise ratio of the hologram reproduced by adjusting the calibration lens and the Fourier lens.

## Description

### CROSS REFERENCE TO RELATED APPLICATIONS

The present application claims priority from Chinese Patent Application No. 202110673706.4 filed on June 17, 2021, all of which are hereby incorporated herein by reference.

### TECHNICAL FIELD

The present invention relates to the technical field of optical storage, and more particularly, relates to a holographic storage optical system and a beam calibrating method thereof.

### BACKGROUND

According to holographic optical storage, data page information is recorded in form of a hologram in the photosensitive medium by means of the interference of light waves. Compared with traditional optical storage technology, holographic optical storage has many advantages, such as large storage capacity, high data transmission rate, and short addressing time. In the holographic optical storage technology, the laser beam is divided into reference light beam and signal light beam. The signal light beam is carried data page information after transmitting through a spatial light modulator or being reflected by a spatial light modulator, and then interferes with the reference light beam in the photosensitive material layer of the storage medium to form a hologram by exposure to record information.

An address layer is provided inside the holographic storage medium, on which annular or spiral grooves or ridge-shaped optical tracks are arranged. Precise positioning thus can be achieved by detecting the annular grooves or ridges with a servo optical sensing system, thereby realizing rapid and convenient data access and storage. Accordingly, introducing a servo optical path into the holographic optical storage optical system can effectively improve the efficiency for storing and researching for data.

When reading a hologram, it is necessary to perform irradiation with the reference light beam same as that used during recording to reproduce the hologram stored in the storage medium. If the storage medium deforms, it is also necessary to adjust the irradiation position and angle of the reproduced reference light beam, so that its wave vector satisfies the Bragg diffraction condition of the hologram, thereby effectively reproducing the signal light. In addition, in order to ensure that the data can be read completely when the holographic disc where the data is burnt reads the data on the same holographic optical drive or on other holographic optical drives, the servo beam and the reference beam are also required to be calibrated. Therefore, it is very necessary to establish an effective calibration system to calibrate the servo beam and the reference beam, so that the optical head can completely read out the data stored in the hologram during high-speed movement.

As for the holographic optical storage system previously designed, whether using off-axis or coaxial holographic technology, its servo optical path system has no calibration mechanism, which makes it difficult to read data completely and lacks compatibility for different devices.

### SUMMARY

The present invention thus provides a holographic storage optical system and a beam calibrating method thereof, which is free from the aforesaid drawbacks.

In a first aspect, a holographic storage optical system is provided, including a storage medium, a recording unit, an imaging unit and a servo unit.

The storage medium includes an address layer and a recording layer, the address layer is composed of a plurality of optical tracks, and a plurality of data holographic positioning marks and calibration holographic positioning marks are disposed on the optical track and respectively used for positioning a hologram for recording data and a calibration hologram for calibrating optical paths.

The data holographic positioning mark and the calibration holographic positioning mark are respectively located in different regions of the optical tracks.

The recording unit is used for generating a signal light beam and a reference light beam, and irradiating the storage medium with the signal light beam and the reference light beam at a certain angle respectively to generate the hologram by interference and exposure on the recording layer of the storage medium. The recording unit includes an optical path for signal light beam, an optical path for reference light beam, and a relay lens group for adjusting the signal light beam and the reference light beam. The relay lens group includes a fixed first Fourier lens and a movable second Fourier lens. The irradiation positions and angles of the signal light beam and the reference light beam are adjusted by moving the second Fourier lens.

The imaging unit is used for converting reproduced light formed by diffraction of the reference light into a data page image and collecting the same, which includes a fourth Fourier lens for imaging and an image sensor for collecting the data page image, namely a hologram reproduced image, and analyzing the diffraction efficiency and the signal-to-noise ratio.

The servo unit is used for ensuring that an optical head is constantly away from the storage medium during the movement relative to the storage medium and ensuring that the signal light beam and the reference light beam move along the optical track, and at the same time, the servo unit is used to accurately position a recording or reproducing position. The servo unit includes a servo laser, a beam splitting module, a calibration lens and a signal detection module. The servo laser is used for generating a servo light beam. The beam splitting module is used for transmitting the servo light beam entering the storage medium from the laser and reflecting the servo beam returned by the storage medium to the signal detection module. The calibration lens is used for adjusting the positions of a servo light spot in the horizontal and vertical directions. The signal detection module is used for detecting the servo light beam returned by the storage medium, and obtaining a servo signal by analysis.

According to the present invention, the position of the servo light spot is calibrated by moving the calibration lens, and the irradiation positions and angles of the reference light beam and the signal light beam are adjusted by moving the second Fourier lens. During recording, the calibration lens and the second Fourier lens are moved to an initial position where the servo light beam converges on the address layer while an interference region of the reference light beam and the signal light beam effectively covers the storage medium. During reading, by moving the second Fourier lens, the irradiation position and angle of the reference light beam are adjusted so that the diffraction efficiency and the signal-to-noise ratio of the hologram reach a maximum value, and the servo light spot is calibrated by the calibration lens so as to be located on the holographic positioning mark. As such, the reproduced reference light beam always reproduces the recorded data page information with an optimal signal-to-noise ratio when the servo light spot is located on the holographic positioning mark.

In order to effectively use the laser emitted by the servo laser to generate the servo signal, the beam splitting module is used in a servo optical path to regulate the polarization state and the marching path of the servo light. Preferably, the beam splitting module includes a first half-wave plate, a first polarizing beam splitter and a 1/4λ wave plate. The first half-wave plate adjusts the servo light beam emitted out of the servo laser into p-polarized servo light. The p-polarized servo light beam can completely transmit through the first polarizing beam splitter. The 1/4λ wave plate adjusts the p-polarized servo light beam transmitting through the first polarizing beam splitter into circularly-polarized servo light, and adjusts the circularly-polarized servo light beam reflected back by the storage medium into s-polarized servo light. The s-polarized servo light beam can be completely reflected by the first polarizing beam splitter to the signal detection module to be detected and analyzed. The signal detection module is preferably a photoelectric detector.

According to the present invention, the recording unit includes a light source module, a signal loading module and an optical head module. The light source module outputs the signal light beam and the reference light beam. The signal loading module loads information in a spatial light modulator into the signal light. The optical head module makes the signal light beam, the reference light beam and the servo light beam enter the storage medium at a certain angle, so that the signal light beam and the reference light beam generate the hologram by interference and exposure on the storage medium.

The optical head module includes a dichroic mirror which reflects the servo light beam and transmits read-write light. The servo light beam and the read-write light thus can be combined.

According to the present invention, the light source module can include only one optical path. The signal loading module can include one optical path or two optical paths. The optical head module can include one optical path or two optical paths.

When the signal loading module includes one optical path, the optical path for signal light beam and the optical path for reference light beam coincide in the optical path, and share one relay lens group. In this situation, the irradiation positions and angles of the signal light beam and the reference light beam can be adjusted at the same time by moving the second Fourier lens. When the signal loading module includes two optical paths, the signal optical path and the optical path for the reference light beam respectively has an independent relay lens group. Specifically, the irradiation position and angle of the signal light beam can be independently adjusted by moving the second Fourier lens of the optical path for signal light, and the irradiation position and angle of the reference light beam can be independently adjusted by moving the second Fourier lens of the optical path for reference light.

When the optical head module includes one optical path, the optical path for signal light, the optical path for the reference light beam and the optical path for the servo light beam share one objective lens and are introduced into the storage medium in a direction perpendicular to the surface of the storage medium. When the optical head module includes a first optical path and a second optical path, the first optical path partially overlaps with the optical path for servo light. In this situation, the first optical path is the light path for the reference light beam when used for the reference light beam to pass through, that is, the light path for reference light beam partially overlaps with the light path for servo light. At this time, the reference light beam and the servo light beam share one objective lens through which the storage medium is irradiated in a direction perpendicular to the surface of the storage medium. According to another preferred embodiment, the first optical path is the light path for the signal light beam when used for the signal light beam to pass through, that is, the light path for the signal light beam partially overlaps with the light path for servo light. At this time, the signal light beam and the servo light beam share one objective lens through which they respectively enter the storage medium in a direction perpendicular to the surface of the storage medium.

In a second aspect, the present invention further provides a beam calibrating method. Before recording a data hologram, a calibration hologram is burned at a calibration holographic positioning mark on an optical track of a storage medium. Before reproducing the data hologram, firstly using the calibration hologram to ensure that a servo light spot is located at the calibration holographic positioning mark by adjusting a calibration lens and a second Fourier lens in a holographic storage optical system, and make the signal-to-noise ratio for reproducing the hologram optimal by changing the irradiation position and angle of the reference beam, and then the data hologram is reproduced.

The present invention detects the diffraction efficiency and the signal-to-noise ratio of the hologram through an image sensor. When the diffraction efficiency and the signal-to-noise ratio of the hologram reach a maximum value, it is considered that the reference beam is adjusted to be optimal.

A method for burning the calibration hologram and the data hologram specifically includes the following steps.

In step S11, the calibration lens and the second Fourier lens are moved to an initial position such that the hologram generated by interference and exposure of reference light beam and signal light beam is effectively located at a recording layer of the storage medium in the case that the servo light spot is focused on an address layer.

In step S12, the calibration lens and the second Fourier lens are fixed, and the storage medium is moved, so that the servo light spot is located at one calibration holographic positioning mark, and the calibration hologram is recorded at this calibration holographic positioning mark.

In step S13, the storage medium is moved so that the servo light spot is located at another calibration holographic positioning mark, and a next calibration hologram is recorded at this calibration holographic positioning mark.

In step S14, step S13 is repeated several times to ensure successful recording of multiple calibration holograms.

In step S15, the storage medium is moved so that the servo light spot is located at a data holographic positioning mark, and one data hologram is recorded at the data holographic positioning mark.

In step S16, the storage medium is moved so that the servo light spot is located at another data holographic positioning mark, and a next data hologram is recorded at the data holographic positioning mark.

In step S17, step S16 is repeated to record all data holograms.

A method for determining the initial position of a calibration lens 50 and a second Fourier lens 202 in step S11 is as follows. The servo light spot is ensured to be on a plane where an optical track of a storage medium 6 is located by optical path simulation design, at the same time, an interference region of the reference light beam and the signal light beam is able to effectively cover the storage medium 6, at this moment, the position where the calibration lens 50 and the second Fourier lens 202 are located is thus the initial position.

Before reproducing the data hologram, a method for moving the storage medium, the calibration lens and the second Fourier lens to perform calibration of a reading position and the reference beam, and a method for reading the data hologram specifically includes the following steps.

In step S21, the storage medium is moved so that an optical head is moved to a position near the calibration holographic positioning mark, and then the position of the calibration lens is fixed.

In step S22, the wavelength of the reference light beam is adjusted and the position of the second Fourier lens and the storage medium are fine-tuned, and the position of the second Fourier lens and the wavelength of the reference light beam are fixed when the diffraction efficiency and the signal-to-noise ratio of the calibration hologram at the calibration holographic positioning mark are optimal.

In step S23, the position of the calibration lens is moved so that the servo light spot is located at the calibration holographic in the optimal mark, and then the position of the calibration lens is fixed;

In step S24, the storage medium is moved so that the servo light spot is located at the next calibration holographic positioning mark, and the calibration hologram is then reproduced at the calibration holographic positioning mark.

In step S25, step S24 is repeated several times to ensure that the signal-to-noise ratio for reproducing the plurality of calibration holograms meets the requirement for the highest signal-to-noise ratio after the second Fourier lens and the calibration lens are fixed.

In step S26, the storage medium is moved so that the servo light spot is located at the data holographic positioning mark, and the data hologram is then reproduced at the data holographic positioning mark.

In step S27, step S26 is repeated to perform reproduction of all the data holograms.

According to the present invention, the position of the servo light spot is detected according to a track locking error signal and a tangential push-pull signal detected via a photoelectric detector.t When the servo light spot is located in the middle of the calibration holographic positioning mark or the data holographic positioning mark, the track locking error signal and the tangential push-pull signal are both located at a zero value between positive and negative maximum values.

The track locking error signal is used for detecting the case that the servo light spot deviates from the optical track. When the servo light spot is located at the center line of the optical track, the track locking error signal is 0, when the servo light spot gradually deviates from the optical track, the track locking error signal gradually tends to a maximum or minimum value, and when the servo light spot completely deviates from the optical track, the track locking error signal becomes 0.

The tangential push-pull signal is used for detecting the holographic positioning mark of the optical track. The holographic positioning mark may be a notch. When the servo light spot is located in the middle of the notch, the tangential push-pull signal is 0, when the servo light spot gradually deviates from the notch, the tangential push-pull signal gradually tends to the maximum or minimum value, and when the servo light spot deviates completely from the notch, the tangential push-pull signal becomes 0.

Compared with the prior art, the holographic storage optical system according to the present invention is provided with a servo unit. The address on the storage medium is addressed and positioned by the servo unit, so that the hologram can be stored in the designated position of the storage medium. During the reading process, the irradiation position and angle of the reference light beam can be adjusted by moving the second Fourier lens, and in combination with the wavelength and the movement of the storage medium, the diffraction efficiency and the signal-to-noise ratio of the hologram can reach the maximum value. After the diffraction efficiency and the signal-to-noise ratio are optimized to the maximum value, the horizontal and vertical positions of the servo light spot are adjusted by the calibration lens in the servo unit, so that the servo light beam can be re-locked the holographic positioning mark, thus ensuring that on the entire storage medium, when a servo disc is located on the holographic positioning mark, the reference light beam can completely reproduce the data page information. With the calibration method of the present invention, even if the medium shrinks and expands, the data in the medium can be read out accurately. Meanwhile, the compatibility for reading the data stored in the hologram for different devices is also enhanced.

### BRIEF DESCRIPTION OF THE DRAWINGS

FIG. 1 is a holographic storage optical system according to one embodiment of the present invention.
FIG. 2 is a schematic diagram showing the convergence of a servo light spot and a reference light spot.
FIG. 3 is a holographic storage optical system according to another embodiment of the present invention.
FIG. 4 is a schematic diagram showing the convergence of a servo light spot and a signal light spot.
FIG. 5 is a holographic storage optical system according to another embodiment of the present invention.
FIG. 6 is a holographic storage optical system according to another embodiment of the present invention.
FIG. 7 is a structural schematic diagram of a storage medium.
FIG. 8 is a block diagram showing the process of positioning and calibration during recording of data hologram.
FIG. 9 is a block diagram showing the process of positioning and calibration during reading of data hologram.
FIG. 10 is a schematic diagram showing the variation of a track locking signal and a tangential push-pull signal with the position of a servo light spot.

### DETAILED DESCRIPTION

The accompanying drawings of the present invention are only used for exemplary illustration, and should not be construed as limiting the present invention. In order to better illustrate the following embodiments, some parts of the drawings may be omitted, enlarged or reduced, and they do not represent the size of actual products. For those skilled in the art, it is understandable that some well-known structures and their descriptions in the drawings may be omitted.

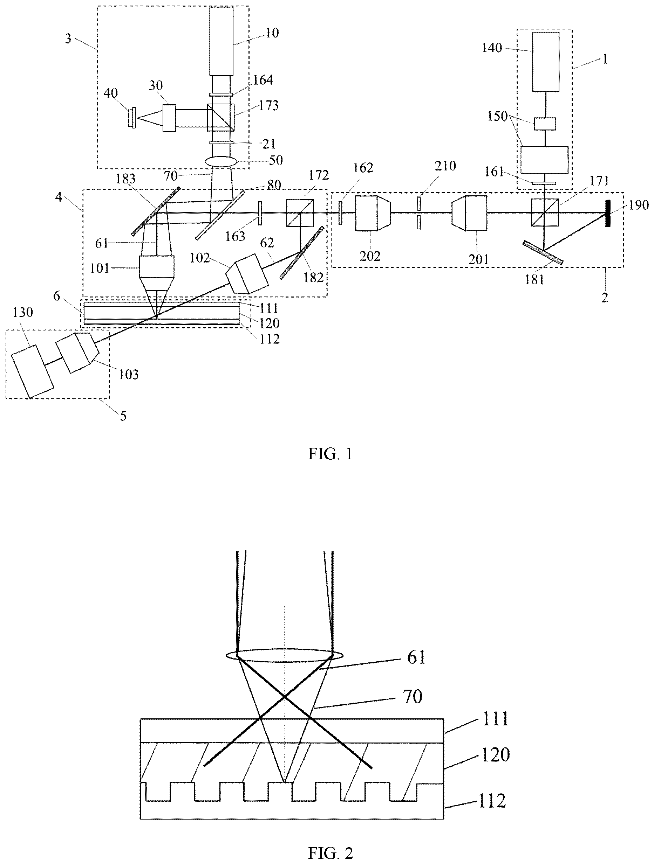

FIG. 1 shows a holographic storage optical system. The holographic storage optical system in this embodiment includes a storage medium 6, a recording unit, an imaging unit 5 and a servo unit 3.

The recording unit is configured for generating a signal light beam 62 and a reference light beam 61, which are introduced into the storage medium 6 at a certain angle respectively to generate a hologram by interference and exposure on a recording layer 120 of the storage medium 6. The recording unit includes an optical path for signal light beam, an optical path for reference light beam, and a relay lens group. The relay lens group includes a fixed first Fourier lens 201 and a movable second Fourier lens 202. The irradiation positions and angles of the signal light beam and the reference light beam can be adjusted by moving the second Fourier lens 202.

The imaging unit 5 includes a camera 130, which is used for collecting a reproduced data page and monitoring the diffraction efficiency and the signal-to-noise ratio of the reproduced data page. If the diffraction efficiency and the signal-to-noise ratio are lower, the positions of the second Fourier lens 202 and the storage medium 6 are adjusted until the diffraction efficiency and the signal-to-noise ratio reach a maximum value. In order to convert the frequency-domain light field of the data page reproduced by the reference light beam into a spatial-domain light field for imaging, a fourth Fourier lens 103 is disposed prior to the camera 130 to perform an inverse Fourier transform on the frequency-domain light field and project a spatial-domain image onto the image sensor target surface of the camera.

The servo unit 3 includes a servo laser 10, a beam splitting module, a movable calibration lens 50 and a signal detection module 40. The servo laser 10 is used for generating a servo light beam 70. The beam splitting module is used for transmitting the servo light beam 70 entering the storage medium 6 from the laser and reflecting the servo light beam 70 returned by the storage medium to the signal detection module 40. The calibration lens 50 is used for adjusting the positions of a servo light spot in the horizontal and vertical directions. The signal detection module 40 is used for detecting the servo light beam returned by the storage medium 6, and obtaining a servo signal by analysis.

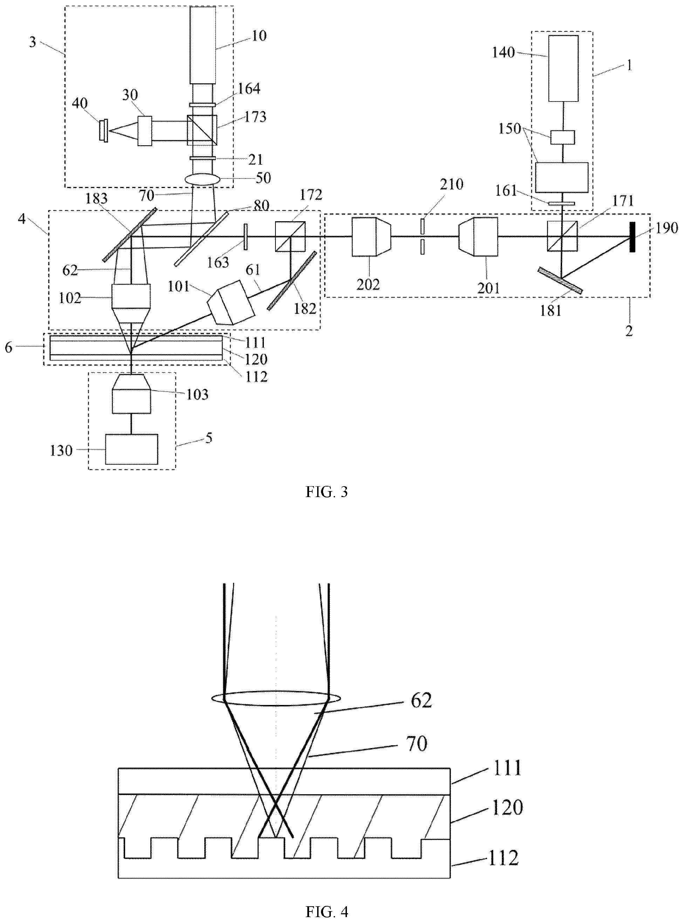

As shown in FIG. 2 or FIG. 4, according to this embodiment, by moving the calibration lens 50, the servo light spot is located on an address layer, namely, the inner surface of a substrate 112 of the address layer. In the recording process, the second Fourier lens 202 and the storage medium 6 are moved to an initial position to ensure that an interference region of reference light beam 61 and signal light beam 62 effectively covers the storage medium. In the reading process, by moving the second Fourier lens 202 and the storage medium 6, the illumination position and angle of the reference light beam 61 are adjusted so that the diffraction efficiency and the signal-to-noise ratio of the hologram reach the maximum value, and the servo light spot is calibrated by the calibration lens 50 to be located on a holographic positioning mark. Thus, when the servo light spot is located on the holographic positioning mark, reproduced reference light beam always reproduces the recorded data page information with an optimal signal-to-noise ratio.

In this embodiment, the beam splitting module of the servo unit 3 further specifically includes a first half-wave plate 164, a first polarizing beam splitter 173 and a 1/4λ wave plate 21. The first half-wave plate 164 adjusts the servo light beam 70 emitted out of the servo laser 10 into p-polarized servo light beam 70, the p-polarized servo light beam 70 can completely transmit through the first polarizing beam splitter 173. The 1/4λ wave plate adjusts the p-polarized servo light beam 70 transmitting through the first polarizing beam splitter into circularly-polarized servo light beam 70, and adjusts the circularly-polarized servo light beam reflected back by the storage medium into s-polarized servo light beam 70. The s-polarized servo light beam 70 can be completely reflected by the first polarizing beam splitter 173 to a photoelectric detector to be detected and analyzed.

The recording unit in this embodiment comprises a light source module 1, a signal loading module 2 and an optical head module 4.

The light source module 1 is used for outputting the signal light beam 62 and the reference light beam 61. The signal loading module 2 is used for loading information in a spatial light modulator 190 into the signal light beam 62. The optical head module 4 is used for making the signal light beam 62, the reference light beam 61 and the servo light beam 70 enter the storage medium 6 at a certain angle, and the signal light beam 61 and the reference light beam 61 generate the hologram by interference and exposure on the storage medium 6.

Preferably, the signal loading module 2 includes only one optical path, in which the optical path for the signal light beam 62 and the optical path for the reference light beam 61 share the relay lens group, so that the irradiation positions and angles of the signal light beam and the reference light beam can be adjusted at the same time by moving the second Fourier lens.

In this embodiment, the optical head module 4 includes two optical paths. A third polarizing beam splitter 172 transmits the reference light beam 61 in a p-polarization direction to a first optical path and reflects signal light beam in an s-polarization direction to a second optical path. The p-polarized reference light beam becomes s-polarized reference light beam after passing through a second half-wave plate 163. The first optical path is provided a dichroic mirror 80 which reflects the servo light beam 70 and transmits the reference light beam 61, thereby combining the servo light beam and the reference light beam. In the first optical path, the reference light beam and the servo light beam share one objective lens 101 and vertically irradiate the storage medium after passing through the objective lens. In the second light path, the signal light beam in the s-polarization direction is transformed into a frequency domain by a third Fourier lens 102, and enters the storage medium 6 at a certain angle relative to the surface of the storage medium.

The signal light beam and the reference light beam with the same s-polarization direction is introduced into the storage medium 6 to form a hologram by interference and exposure at a recording position where the servo unit 3 is positioned in the recording layer 120 of the storage medium 6, thus completing the recording of information.

During reproduction, the spatial light modulator 190 has no input signal, only the reference light beam irradiates the hologram recording the information in the storage medium 6, a diffracted light obtained will continue to propagate in the propagation direction of original signal light beam after passing through the storage medium, and the reproduced data information is collected by the imaging unit 5.

FIG. 3 provides another embodiment, in this embodiment, the signal loading module 2 includes only one optical path, the optical path for the signal light beam 62 and the optical path for the reference light beam 61 share the relay lens group, so that the irradiation positions and angles of the signal light beam and the reference light beam can be adjusted at the same time by moving the second Fourier lens.

The optical head module 4 includes two optical paths according to the present embodiment. A third half-wave plate 162 is removed in the present embodiment. A third polarizing beam splitter 172 transmits signal light beam in a p-polarization direction to the first optical path and reflects reference light beam in an s-polarization direction to the second optical path. The first optical path is provided with a dichroic mirror 80 which reflects the servo light beam 70 and transmits the signal light beam 62, thereby combining the servo light beam and the signal light beam. In the first optical path, the signal light beam is converted into s-polarized signal light beam after passing through the second half-wave plate 163. The signal light beam and the servo light beam vertically enter the surface of the storage medium after passing through the same third Fourier lens 102. In the second light path, the reference light beam in the s-polarization direction converges into a reference light spot through the first objective lens 101 to enter the storage medium 6 at a certain angle relative to the horizontal plane of the storage medium.

The signal light spot and the reference light spot with same s-polarization direction is introduced into the storage medium 6 to form a hologram by interference and exposure at a recording position where the servo unit is positioned in the recording layer 120 of the storage medium, thus completing the recording of information.

During reproduction, the spatial light modulator 190 has no input signal, only the reference light beam irradiates the hologram recording the information in the storage medium, a diffracted light obtained will continue to propagate in the propagation direction of original signal light beam after passing through the storage medium, and the reproduced data information is collected by the imaging unit 5.

The servo unit and the imaging unit in this embodiment are the same as the servo optical path and the imaging unit in the embodiment described in FIG. 1 and will not be described again here.

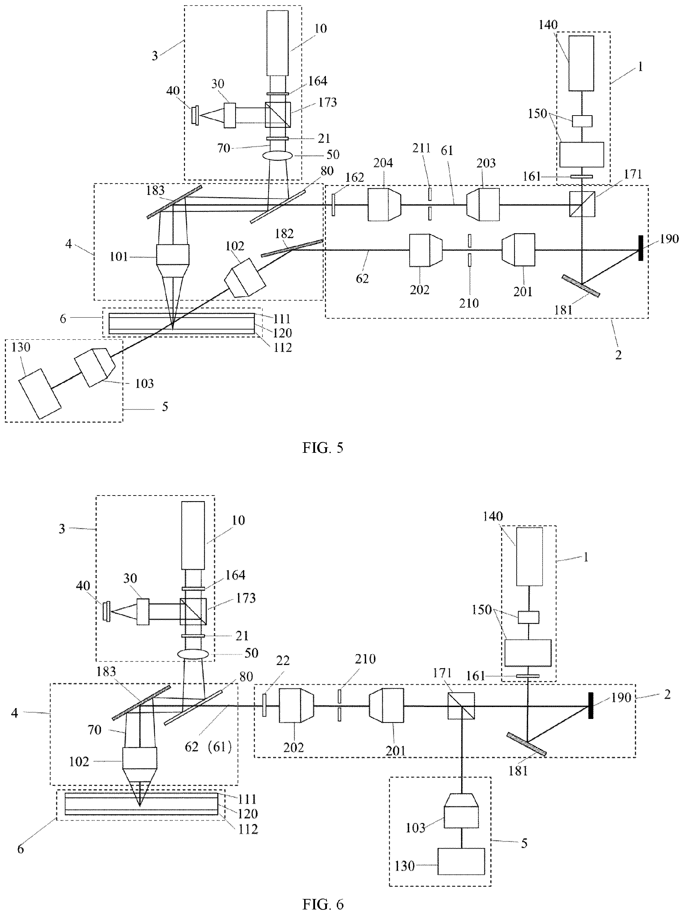

FIG. 5 provides another embodiment. According to the present embodiment, the light source module 1 includes only one optical path, in which an optical path for the signal light beam and an optical path for the reference light beam overlap with each other. The signal loading module 2 includes two optical paths, the optical path for the signal light beam 62 and the optical path for the reference light beam 61 respectively have an independent relay lens group. The irradiation positions and angles of the signal light beam 62 and the reference light beam 61 can be respectively adjusted by respectively moving a second Fourier lens 202 and a second Fourier lens 204.

The optical head module 4 includes two optical paths. A first optical path comprises a dichroic mirror 80 which reflects the servo light beam 70 and transmits the reference light beam 61, thereby combining the servo light beam and the reference light beam. In the first optical path, an optical path for the reference light beam and an optical path for the servo light beam share one objective lens 101, and the reference light beam and the servo light beam irradiate the storage medium in a direction perpendicular to the surface of the storage medium after passing through the objective lens 101. In a second light path, the signal light beam converges into a signal light spot through a third Fourier lens 102 to enter the storage medium 6 at a certain angle relative to the horizontal plane of the storage medium.

The signal light spot and the reference light spot with the same p-polarization direction is introduced into the storage medium 6 to form a hologram by interference and exposure at a recording position where the servo unit is positioned in the recording layer 120 of the storage medium 6, thus completing the recording of information.

During reproduction, the spatial light modulator 190 has no input signal, only the reference light beam irradiates the hologram recording the information in the storage medium, a diffracted light obtained will continue to propagate in the propagation direction of original signal light beam after passing through the storage medium, and the reproduced data information is collected by the imaging unit 5.

The servo unit and the imaging unit in this embodiment are the same as the servo optical path and the imaging unit in the embodiment described in FIG. 1 and will not be described again here.

FIG. 6 provides another embodiment. According to the present embodiment, the light source module 1 includes only one optical path, in which an optical path for the signal light beam and an optical path for the reference light beam overlap with each other. The signal loading module 2 includes only one optical path, in which the optical path for the signal light beam 62 and the optical path for the reference light beam 61 share the relay lens group. The irradiation positions and angles of the signal light beam 62 and the reference light beam 61 can be adjusted at the same time by moving the second Fourier lens 202.

The optical head module 4 includes one optical path. The optical head module includes a dichroic mirror 80 which can reflect the servo light beam 70 and transmit the reference light beam 61 or the signal light beam 62, thereby combining the servo light beam with the reference light beam and the signal light beam. The optical path for the signal light beam, the optical path for the reference light beam and the optical path for the servo light beam share one objective lens, and the signal light beam, the reference light beam and the servo light beam irradiate the storage medium in a direction perpendicular to the surface of the storage medium.

The signal light spot and the reference light spot with the same p-polarization direction are introduced into the storage medium 6 to form a hologram by interference and exposure at a recording position where the servo unit is positioned in the recording layer 120 of the storage medium 6, thus completing the recording of information.

During reproduction, the spatial light modulator 190 has no input signal, only the reference light beam irradiates the hologram recording the information in the storage medium, a diffracted light obtained will return in the direction of original signal light beam in the same way, and is reflected by a second polarizing beam splitter 171 in the signal loading module to the imaging unit module 5, and reproduced data information is collected via the imaging unit.

The servo unit in this embodiment is the same as the servo optical path in the embodiment described in FIG. 1 and will not be described again here.

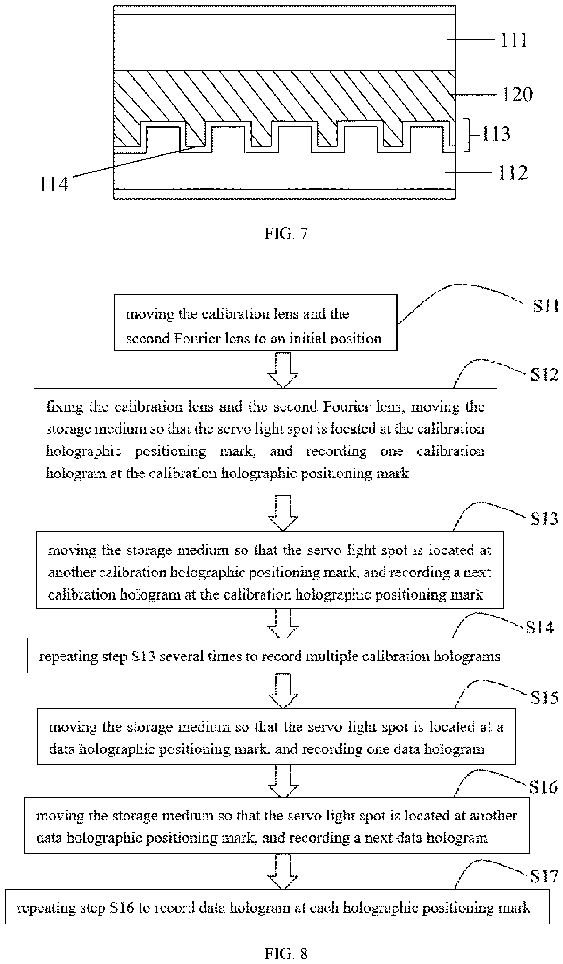

The storage medium in the above-mentioned embodiments is an optical disc, and as shown in FIG. 7, the storage medium includes a first substrate 111, a recording layer 120 and a second substrate 112 which are successively stacked. The second substrate 112 is engraved with an address layer 113 of a concave-convex structure on the surface close to the recording layer 120. The concave-convex structure of the address layer 113 forms a plurality of optical tracks, and the concave-convex structure is provided with data holographic positioning marks 114 for servo light beam to position a recording position and a reproduction position, calibration holographic positioning marks 114 and a start mark. The data holographic positioning mark and the calibration holographic positioning mark are both a notch on the optical track. The data holographic positioning mark and the calibration holographic positioning mark are located in different regions of the optical track, respectively.

In the data reading process, the holographic storage optical system in the above-mentioned embodiments achieves the calibration of the relative positions of the servo light spot, the reference light spot and the signal light spot in the following manner.

Referring to FIG. 8, before recording the hologram, the calibration hologram and the data hologram are burned, which including the following steps.

In step S11, the calibration lens 50 and the second Fourier lens 202 are moved to an initial position such that the hologram generated by interference and exposure of the reference light beam 61 and the signal light beam 62 is effectively located at the recording layer of the storage medium in the case that the servo light spot is focused on the address layer 113.

In step S12, the calibration lens 50 and the second Fourier lens 202 are fixed, and the storage medium 6 is moved so that the servo light spot is located at the calibration holographic positioning mark, and one calibration hologram is recorded at the calibration holographic positioning mark.

In step S13, the storage medium 6 is moved so that the servo light spot is located at another calibration holographic positioning mark, and a next calibration hologram is recorded at the calibration holographic positioning mark.

In step S14, step S13 is repeated several times to ensure successful recording of multiple calibration holograms.

In step S15, the storage medium is moved so that the servo light spot is located at the data holographic positioning mark, and one data hologram is recorded at the data holographic positioning mark.

In step S16, the storage medium is moved so that the servo light spot is located at another data holographic positioning mark, and a next data hologram is recorded at the data holographic positioning mark.

In step S17, step S16 is repeated to record all data holograms.

A method for determining the initial position of the calibration lens 50 and the second Fourier lens 202 in step S11 is as follows. The servo light spot is ensured to be on a plane where the optical track of the storage medium 6 is located by optical path simulation design, at the same time an interference region of the reference light beam and the signal light beam is able to effectively cover the storage medium 6, at this moment, the position where the calibration lens 50 and the second Fourier lens 202 are located is thus the initial position.

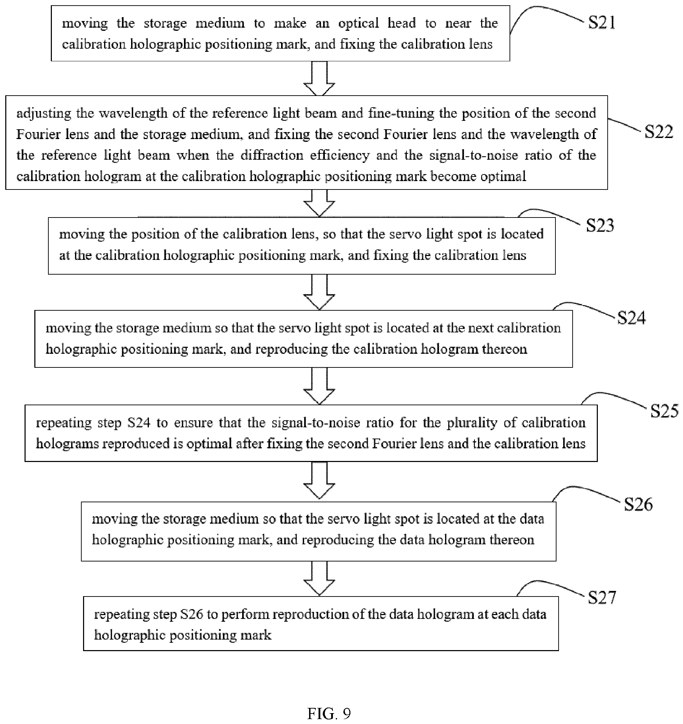

Referring to FIG. 9, before reproducing the data hologram, a method for moving the storage medium 6, the calibration lens 50 and the second Fourier lens 202 to perform calibration of the reading position and the reference light beam, and a method for reading the data hologram specifically includes the following steps.

In step S21, the storage medium 6 is moved so that an optical head 4 is moved to a position near the calibration holographic positioning mark, then the calibration lens 50 is fixed;

In step S22, the wavelength of the reference light beam 61 is adjusted and the second Fourier lens 202 and the storage medium 6 are fine-tuned, and the position of the second Fourier lens 202 and the wavelength of the reference light beam 61 is fixed when the diffraction efficiency and the signal-to-noise ratio of the calibration hologram at the calibration holographic positioning mark are optimal.

In step S23, the calibration lens 50 is moved so that the servo light spot is located at the calibration holographic positioning mark, then the position of the calibration lens 50 is fixed.

In step S24, the storage medium 6 is moved so that the servo light spot is located at the next calibration holographic positioning mark, and the calibration hologram is then reproduced at the calibration holographic positioning mark.

In step S25, step S24 is repeated several times to ensure that the signal-to-noise ratio for reproducing the plurality of calibration holograms meets the requirement for the highest signal-to-noise ratio after the second Fourier lens 202 and the calibration lens 50 are fixed.

In step S26, the storage medium 6 is moved so that the servo light spot is located at the data holographic positioning mark, and the data hologram is then reproduced at the data holographic positioning mark.

In step S27, step S26 is repeated to perform reproduction of all the data holograms.

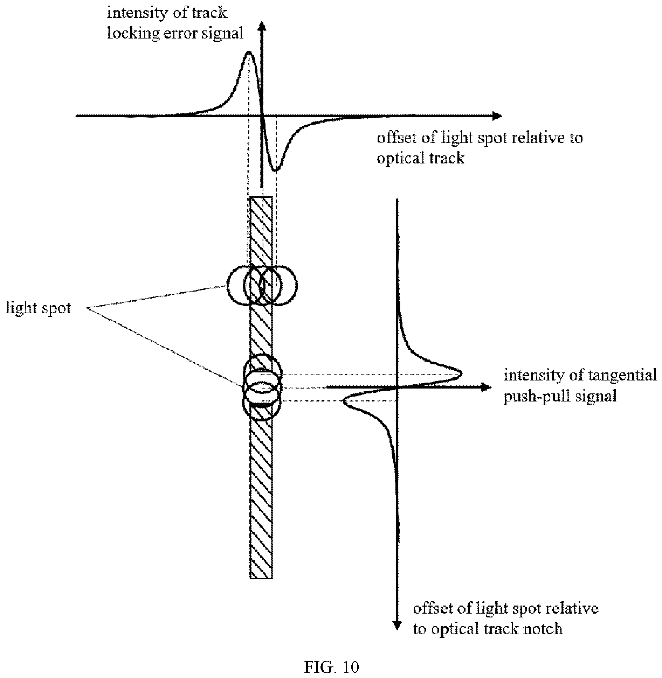

As shown in FIG. 10, the position of the servo light spot is detected according to a track locking error signal and a tangential push-pull signal detected via a photoelectric detector. When the servo light spot is located in the middle of the calibration holographic positioning mark or the data holographic positioning mark, the track locking error signal and the tangential push-pull signal are both located at a zero value between positive and negative maximum values.

The track locking error signal is used for detecting the case that the servo light spot deviates from the optical track. When the servo light spot is located at the center line of the optical track, the track locking error signal is 0, when the servo light spot gradually deviates from the optical track, the track locking error signal gradually tends to a maximum or minimum value, and when the servo light spot completely deviates from the optical track, the track locking error signal becomes 0.

The tangential push-pull signal is used for detecting the holographic positioning mark of the optical track. The holographic positioning mark may be a notch. When the servo light spot is located in the middle of the notch, the tangential push-pull signal is 0, when the servo light spot gradually deviates from the notch, the tangential push-pull signal gradually tends to the maximum or minimum value, and when the servo light spot deviates completely from the notch, the tangential push-pull signal becomes 0.

Obviously, the above-mentioned embodiments of the present invention are only examples for clearly illustrating the technical solutions of the present invention, and are not intended to limit the specific embodiments of the present invention. Any modifications, equivalent replacements, improvements, etc. made within the spirit and principles of the claims of the present invention shall be included within the protection scope of the claims of the present invention.

## Claims

1. A holographic storage optical system, comprising:
a storage medium which comprises an address layer and a recording layer,
wherein the address layer is composed of a plurality of optical tracks, each optical track is provided with a plurality of data holographic positioning marks and a plurality of calibration holographic positioning marks, each data holographic positioning mark is configured to position a data hologram for recording data, and each calibration holographic positioning mark is configured to position a calibration hologram for calibrating optical paths of the holographic storage optical system;
a recording unit, which is configured to generate a signal light beam and a reference light beam, and introduce the signal light beam and the reference light beam into the storage medium at a certain angle respectively to generate the data hologram by interference and exposure on the recording layer of the storage medium, the recording unit comprising an optical path for the signal light beam, an optical path for the reference light beam, and a relay lens group for adjusting the signal light beam and the reference light beam,
wherein the relay lens group comprises a fixed first Fourier lens and a movable second Fourier lens, and an irradiation position and an angle of the signal light beam and the reference light beam are adjusted by moving the second Fourier lens;
an imaging unit, which is configured to convert a reproduced signal light beam formed by diffraction of the reference light beam into a data page image, and collect the same, the imaging unit comprising a fourth Fourier lens for imaging and an image sensor for collecting the data page image and analyzing a diffraction efficiency and a signal-to-noise ratio of the data page image; and
a servo unit, which is configured to ensure that an optical head of the recording unit is constantly away from the storage medium during movement relative to the storage medium and to ensure that the signal light beam and the reference light beam moving along each optical track, and is configured to accurately position a recording position or a reproducing position on the storage medium,
wherein the servo unit comprises
a servo laser, which is configured to generate a servo light beam;
a beam splitting module, which is configured to transmit the servo light beam to enter the storage medium from the servo laser and reflect the servo light beam returned by the storage medium to a signal detection module;
a calibration lens, which is configured to adjust a servo light spot of the servo light beam in the horizontal and vertical directions to the data holographic positioning marks or the calibration holographic positioning marks; and
the signal detection module, which is configured to detect and analyze the servo light beam returned by the storage medium, and obtain a servo signal.

2. The holographic storage optical system according to Claim 1, wherein the beam splitting module comprises a half-wave plate, a polarizing beam splitter and a 1/4λ wave plate,
wherein the servo light beam from the servo laser is adjusted into a p-polarized servo light beam by the half-wave plate, the p-polarized servo light beam is transmitted by the polarizing beam splitter and is adjusted into a circularly-polarized servo light beam by the 1/4λ wave plate, the circularly-polarized servo light beam is reflected by the storage medium and adjusted into a s-polarized servo light beam by the 1/4λ wave plate, the s-polarized servo light beam is reflected by the polarizing beam splitter to the signal detection module to be detected and analyzed.

3. The holographic storage optical system according to Claim 2, wherein the recording unit comprises:
a light source module, which is configured to output the signal light beam and the reference light beam;
a signal loading module, which is configured to load information in a spatial light modulator into the signal light beam; and
an optical head module, which is configured to introduce the signal light beam, the reference light beam and the servo light beam into the storage medium at a certain angle, so that the signal light beam and the reference light beam generate the data hologram by interference and exposure at each data holographic positioning mark of the storage medium.

4. The holographic storage optical system according to Claim 3, wherein the signal loading module comprises one optical path, the optical path for the signal light beam and the optical path for the reference light beam coincide in the optical path and share the relay lens group.

5. The holographic storage optical system according to Claim 3, wherein the signal loading module comprises two optical paths which respectively correspond to the optical path for signal light beam and the optical path for reference light beam, and each optical path has the relay lens group independently.

6. The holographic storage optical system according to Claim 3, wherein the optical head module is provided with a dichroic mirror, which is configured to reflect the servo light beam and transmit the signal light beam or the reference light beam so that the servo light beam is combined with the signal light beam or the reference light beam in one optical path.

7. The holographic storage optical system according to Claim 6, wherein the optical head module comprises a first optical path and a second optical path, the first optical path is the optical path for the reference light beam used for passing the reference light beam, the second optical path is the optical path for signal light used for passing the signal light bean, the optical path for reference light beam at least partially overlaps with an optical path for the servo light beam used for passing the servo light beam, and the reference light beam and the servo light beam are vertically introduced into the storage medium after passing through a same objective lens.

8. The holographic storage optical system according to Claim 6, wherein the optical head module comprises a first optical path and a second optical path, the first optical path is the optical path for signal light beam used for passing the signal light beam, the second optical path is the optical path for reference light used for passing the reference light beam, the optical path for signal light beam at least partially overlaps with an optical path for the servo light beam used for passing the servo light beam, and the signal light beam and the servo light beam are vertically introduced into the storage medium after passing through a same objective lens.

9. The holographic storage optical system according to Claim 6, wherein the optical head module comprises one optical path, wherein the optical path for signal light beam and the optical path for reference light beam coincide in the optical path, and in the optical path, the signal light beam, the reference light beam and the servo light beam are vertically introduced into the storage medium after passing through one same objective lens.

10. A beam calibrating method of the holographic storage optical system according to any one of Claims 1-9, comprising steps of:
S1. before recording the data hologram at each data holographic positioning mark, burning the calibration hologram at each calibration holographic positioning mark on each optical track of the storage medium; and
S2. before reproducing the data hologram, firstly using the calibration hologram to ensure that the signal-to-noise ratio for reproducing the calibration hologram is optimal by adjusting a second Fourier lens in the holographic storage optical system to change the irradiation position and angle of the reference beam on the storge medium, and to ensure that the servo light spot is located at the calibration holographic positioning mark by adjusting the calibration lens.

11. The beam calibrating method according to Claim 10, wherein the diffraction efficiency and the signal-to-noise ratio of the hologram are detected by the image sensor, when the diffraction efficiency and the signal-to-noise ratio of the hologram reach a maximum value, the reference light beam is adjusted to be optimal.

12. The beam calibrating method according to Claim 11, wherein a method for burning the calibration hologram and the data hologram comprises the following steps:
S11. moving the calibration lens and the second Fourier lens to an initial position such that the data hologram generated by interference and exposure of the reference light beam and the signal light beam is effectively located at the recording layer of the storage medium when the servo light spot is focused on the address layer;
S12. fixing the calibration lens and the second Fourier lens, moving the storage medium so that the servo light spot is located at one calibration holographic positioning mark, and recording the calibration hologram at this calibration holographic positioning mark;
S13. moving the storage medium so that the servo light spot is located at another calibration holographic positioning mark, and recording a next calibration hologram at the another calibration holographic positioning mark;
S14. repeating step S13 several times to record multiple calibration holograms at each calibration holographic positioning mark;
S15. moving the storage medium so that the servo light spot is located at one data holographic positioning mark, and recording the data hologram at the data holographic positioning mark;
S16. moving the storage medium so that the servo light spot is located at another data holographic positioning mark, and recording a next data hologram at the another data holographic positioning mark; and
S17. repeating step S16 to record the data hologram at each data holographic positioning mark.

13. The beam calibrating method according to Claim 12, wherein a method for determining the initial position of the calibration lens and the second Fourier lens in step S11 is that: when the servo light spot is on a plane where the optical track of the storage medium is located by an optical path simulation design, and an interference region of the reference light beam and the signal light beam effectively covers the storage medium, the position where the calibration lens and the second Fourier lens are located is the initial position.

14. The beam calibrating method according to Claim 13, wherein before reproducing the data hologram, the method of moving the storage medium, the calibration lens and the second Fourier lens to perform calibration of the servo light beam and the reference light beam comprises steps of:
S21. moving the storage medium to move an optical head to a position near one calibration holographic positioning mark, and fixing the calibration lens;
S22. adjusting a wavelength of the reference light beam and fine-tuning the position of the second Fourier lens and the storage medium, and fixing the position of the second Fourier lens and the wavelength of the reference light beam when the diffraction efficiency and the signal-to-noise ratio of the calibration hologram at the calibration holographic positioning mark is optimal;
S23. moving the position of the calibration lens until the servo light spot is located at the calibration holographic positioning mark;
S24. moving the storage medium so that the servo light spot is located at the next calibration holographic positioning mark, and reproducing the calibration hologram at the next calibration holographic positioning mark;
S25. repeating step S24 several times to ensure that the signal-to-noise ratio of the plurality of calibration holograms reproduced is optimal after fixing the second Fourier lens and the calibration lens;
S26. moving the storage medium so that the servo light spot is located at one data holographic positioning mark, and reproducing the data hologram at the data holographic positioning mark; and
S27. repeating step S26 to perform reproduction of all the data holograms at each data holographic positioning mark.

15. The beam calibrating method according to any one of Claims 11-14, wherein the position of the servo light spot is detected according to a track locking error signal and a tangential push-pull signal detected by a photoelectric detector, when the servo light spot is located in a middle of each calibration holographic positioning mark or the data holographic positioning mark, the track locking error signal and the tangential push-pull signal are a zero value between positive and negative maximum values.

16. The beam calibrating method according to Claims 15, wherein the track locking error signal is used for detecting if the servo light spot deviates from the optical tracks, when the servo light spot is located at the center line of the optical tracks, the track locking error signal is 0, when the servo light spot gradually deviates from the optical track, the track locking error signal gradually tends to a maximum or minimum value, and when the servo light spot completely deviates from the optical track, the track locking error signal becomes 0.

17. The beam calibrating method according to Claims 15, wherein the tangential push-pull signal is used for detecting the holographic positioning mark of the optical tracks, the holographic positioning mark is a notch, when the servo light spot is located in the middle of the notch, the tangential push-pull signal is 0, when the servo light spot gradually deviates from the notch, the tangential push-pull signal gradually tends to the maximum or minimum value, and when the servo light spot deviates completely from the notch, the tangential push-pull signal becomes 0.
